# EUROPEAN PATENT APPLICATION

(11) **EP 1 772 705 A1**
(43) Date of publication of application: **11.04.2007**
(21) Application number: 05766393.2
(22) Date of filing: 22.07.2005
(51) Int. Cl.: G01C 21/00, G08G 1/0969, G09B 29/10

(54) **NAVIGATION SYSTEM, ROUTE SEARCH DEVICE, NAVIGATION DEVICE, AND PROGRAM**

(30) Priority: 23.07.2004 JP 2004215613
(71) Applicant: Navitime Japan Co., Ltd., Tokyo 101-0051 (JP)
(72) Inventor: KIKUCHI, Shin, c/o NAVITIME JAPAN CO. LTD., Tokyo 1010051 (JP)
(74) Representative: Wiedemann, Peter
(86) International application number: PCT/JP2005/013460
(87) International publication number: WO 2006/009246

(57) **Abstract**

A navigation device (30) has a route search request section (32) and a bearing detection section (36). The route search request section (32) sends, as a route search request, to a route search device a bearing that is detected by the bearing detection section (36), in addition to a current position or departure point of and a destination of the navigation device. The route search device (20) has a route search section (24) for searching for a route from the current position or departure point to the destination by referring to a route network database (28) that is constructed from links making connection between nodes of the links and from costs of the links. The route search device (20) starts a route search after selecting a link in a direction close to the orientation of the navigation device, the link being a link out of the links near the current position or departure point of the navigation device. The navigation device performs a route search according to a direction in which a walker or an automobile starts to move or is moving, and this enables an effective route search.

## Description

### TECHNICAL FIELD

The present invention relates to a navigation system for searching the optimal route from a departure point to a destination to guide a walker or the driver of an automobile, to a route search device, to a navigation device, and to a program. The present invention particularly relates to a route search device, navigation device, and program whereby a route search can be performed according to the direction in which a walker or an automobile starts to move, and an efficient route search can be performed.

### BACKGROUND ART

In the past, when traveling to a destination in an unfamiliar place, a traveler followed an atlas or the like and arrived at the destination by identifying a transport facility, a road, a landmark, or an address shown in the map. In an automobile equipped with a car navigation system (hereinafter referred to as a car navigation system), a traveler reaches a destination while receiving directions displayed on a monitor screen or voice directions (navigation information) from the navigation system by activating the car navigation system and inputting the destination.

The car navigation system described above uses a GPS (Global Positioning System) in which GPS signals transmitted from a plurality of GPS satellites orbiting the earth are received by a GPS antenna, and a position is determined by analyzing satellite positions, time information, and the like that are included in the GPS signals. At least four or more of the plurality of GPS satellites are needed to determine a position. The accuracy of independent positioning in a GPS in general is a little over 10 m, but the accuracy is enhanced to 5 m or less through the use of a DGPS (Differential GPS). A trend in all models of so-called third-generation mobile telephones is the installation of positioning units that are currently installed only in some mobile telephones. Examples of such units include GPS receivers for receiving a signal from a GPS (Global Positioning System) satellite to determine a position.

Techniques in various fields have been proposed for utilizing a mobile terminal that has this type of positioning capability. For example, a proposal has been made for the evolution of an automobile navigation device (car navigation system) into a communication-type navigation system used by a walker, in which map/route information is delivered from an information delivery server (route search server) using a mobile telephone as a terminal. A payment system that uses a mobile telephone as a terminal, and various Internet transaction systems and the like have also been proposed. Mobile telephones have also recently come to be used for reporting events or incidents, and there is an increasing need for a technique that can be used to determine the place of origin of a report. An attempt has also been made to utilize a mobile telephone positioning system to locate the elderly, and the use of this technique is expected to become increasingly widespread in the future.

The performance of mobile telephones, PHS, and other mobile communication terminal devices has improved dramatically in recent years, and these devices are being provided with multifunction capability. Besides voice communication capability, data communication capability in particular is being emphasized, and various types of data communication services are provided to users over the Internet. A navigation service is one of these services, and a communication-type navigation system has been implemented for providing route guidance from a current position to a destination to not only the driver of an automobile, but also the user of a mobile telephone.

An example of the route search device and route search method used in a typical navigation device and communication navigation system is disclosed in Patent Reference 1 (Japanese Laid-open Patent Application No. 2001-165681) below. In this navigation system, information relating to the departure point and the destination is transmitted from a mobile navigation terminal to an information delivery server, the information delivery server searches a route that matches search conditions from a road network or a transportation network, and guidance is provided. The search conditions include the means of travel from the departure point to the destination, examples of which include walking, an automobile, a railroad, a combination of railroad and walking, and the like. The route search is performed using this factor as one search condition.

The information delivery server is provided with a database of cost information (distance or required time) for all links, wherein the links are routes that connect nodes, and nodes are the positions of junctions and turns in roads (routes) in the map data. The information delivery server can guide the mobile navigation terminal along the shortest route by referring to the database, sequentially searching the links that lead from the departure point node to the destination node, and creating a guide route by tracing nodes and links for which the cost information of the link indicates the smallest cost. A technique known as a label setting algorithm or a Dijkstra algorithm is used as the technique for performing this type of route search. In Patent Reference 1 mentioned above, a route search method that uses this Dijkstra algorithm is also disclosed.

Roads or routes for walkers include bi-directional routes. In a typical route search device, the links that connect nodes therefore include bi-directional links, and a bi-directional route search is usually performed so as to enable route guidance regardless of which direction the user of the route network travels. The map display terminal and map display support device described in Patent Reference 2 (Japanese Laid-open Patent Application No. 2002-357440) below are cited as an example.

In the map display terminal and map display support device disclosed in Patent Reference 2, a route search is requested from the map display support device via the Internet when a departure point and a destination are inputted to the map display terminal. In the support device that receives the request, an optimum route that connects the departure point and the destination is searched for each departure direction by a route search section on the basis of road data, optimum route data of a plurality of searched routes are returned to the map display terminal via a delivery section, and the delivery section transmits the map data of the vicinity of the optimum route for each route to the map display terminal. The map display terminal internally stores the map data and optimum route data for each of the routes (each of the departure directions) thus received, and the map data and optimum route data for each of the routes are used by a map display control section to create a display screen that shows a map image centered at the current position. Also shown on the screen are the route-specific optimum routes highlighted distinctly in red, and a current position mark oriented in the direction of the current bearing.

The user can be guided to the destination by selecting an optimum route for travel that is aligned in the direction of the user's departure from among the optimum routes for each of the routes (each of the departure directions) displayed on the screen. For example, in the case of an automobile, it is possible to select the optimum route that matches the direction in which the automobile is departing, and to receive navigation. Specifically, when the automobile is departing south, the automobile can reach the destination by traveling along a first optimum route that matches the south direction. When the automobile is departing north, the automobile can reach the destination by traveling along a second optimum route that is aligned with the north direction.
[Patent Reference 1]: Japanese Laid-open Patent Application No. 2001-165681
[Patent Reference 2]: Japanese Laid-open Patent Application No. 2002-357440

### DISCLOSURE OF THE INVENTION

### [Problems the Invention Is Intended To Solve]

In the map display terminal and map display support device disclosed in Patent Reference 2, a route search is performed for each departure direction for all possible starting directions rather than following a direction specified by the map display support device. The device is therefore easy to use, but finding a plurality of routes for each direction involves a large amount of communication or route searching, and the plurality of routes must first be stored in the map display terminal as well. These operations are difficult to perform with an extremely inexpensive map display terminal (navigation device) that has minimal resources.

When a rerouting (route update) is performed in cases in which a right or left turn cannot be made as guided at an intersection or the like on the guidance route while the automobile is traveling, the automobile is often already in motion, and it is of no use to perform a route search for each departure direction when the direction of travel is already apparent. In addition, a positioning system such as an Assisted GPS has drawbacks in that the positioning interval is long, and time is therefore needed to determine the current position and direction.

As a result of various investigations conducted in order to overcome the aforementioned drawbacks, the present inventors developed the present invention upon discovering that the aforementioned drawbacks can be overcome by adopting a configuration in which an electronic compass or other bearing detection section is provided to a navigation device; the bearing at which the navigation device is oriented is added to the departure point, destination, travel means, and other route search conditions; a route search request is transmitted to a route search device; and the route search device performs a route search using a link that is oriented near the transmitted bearing as a departure link to return an optimum guidance route to the navigation device.

Specifically, an object of the present invention is to overcome the aforementioned drawbacks and to provide a navigation system, a route search device, a navigation device, and a program whereby an efficient route search can be carried out by performing the route search according to the direction in which a walker or an automobile begins to move or is moving.

### [Means for Solving the Abovementioned Problems]

In order to overcome the aforementioned drawbacks, the invention according to a first aspect is a navigation system comprising a navigation device and a route search device, characterized in that the navigation device comprises a route search request section and a bearing detection section, wherein the bearing detection section detects a bearing at which the navigation device is oriented; the route search request section transmits the bearing as a route search request, in addition to a destination and a current position or departure point of the navigation device, to the route search device; the route search device comprises a route network database that is composed of links for connecting nodes and of costs of the links, wherein the nodes are ends of a route, intersections, turnoff points, and the like, and further comprises a route search section for referencing the route network database and searching a route to a destination from the current position or departure point; and the route search section selects a link that is in a direction near an orientation of the navigation device from among links in the vicinity of a current position or departure point of the navigation device, and initiates a route search.

The invention according to a second aspect is the navigation system of the first aspect characterized in that the route search section has a search direction determination section; a link that is in a direction that is near the orientation of a navigation device from among links in the vicinity of a current position or departure point of the navigation device is determined as a departure link on the basis of bearing information transmitted from the navigation device; and a route search is performed using the determined departure link as a starting link for the route search.

The invention according to a third aspect is the navigation system of the first aspect characterized in that the route search section has a search direction determination section, and a route search is initiated in a state in which a link that is in a direction that differs significantly from the orientation of a navigation device from among links in the vicinity of a current position or departure point of the navigation device is temporarily deleted from the route network database.

The invention according to a fourth aspect is a route search device that constitutes a navigation system comprising a route search request section and a bearing detection section, wherein the bearing detection section detects a bearing at which the navigation device is oriented, and the route search request section transmits the bearing as a route search request, in addition to a destination and a current position or departure point of the navigation device, to the route search device; the route search device characterized in comprising a route network database that is composed of links for connecting nodes and of costs of the links, wherein the nodes are ends of a route, intersections, turnoff points, and the like; and a route search section for referencing the route network database and searching a route to a destination from the current position or departure point, wherein the route search section selects a link that is in a direction near an orientation of the navigation device from among links in the vicinity of a current position or departure point of the navigation device, and initiates a route search.

The invention according to a fifth aspect is the route search device of the fourth aspect characterized in that the route search section has a search direction determination section; a link that is in a direction that is near the orientation of a navigation device from among links in the vicinity of a current position or departure point of the navigation device is determined as a departure link on the basis of bearing information transmitted from the navigation device; and a route search is performed using the determined departure link as a starting link for the route search.

The invention according to a sixth aspect is the route search device of the fourth aspect characterized in that the route search section comprises a search direction determination section, and a route search is initiated in a state in which a link that is in a direction that differs significantly from the orientation of a navigation device from among links in the vicinity of a current position or departure point of the navigation device is temporarily deleted from the route network database.

The invention according to a seventh aspect is a navigation device that comprises the navigation system of any one of the first through third aspects, the navigation device characterized in comprising a route search request section and a bearing detection section, wherein the bearing detection section detects a bearing at which the navigation device is oriented, and the route search request section transmits the bearing as a route search request, in addition to a destination and a current position or departure point of the navigation device, to the route search device.

The invention according to an eighth aspect is a program characterized in comprising executing a routine as a search direction determination section for selecting, as a departure link, a link that is in a direction that is near the orientation of a navigation device from among links in the vicinity of a current position or departure point of a navigation device on the basis of bearing information included in the route search request, and initiating a route search in a computer that constitutes a route search device in a navigation system comprising a navigation device and a route search device, wherein the navigation device has a route search request section and a bearing detection section; the bearing detection section detects a bearing at which the navigation device is oriented; the route search request section transmits the bearing as a route search request, in addition to a destination and a current position or departure point of the navigation device, to the route search device; and the route search device comprises a route network database that is composed of links for connecting nodes and of costs of the links, wherein the nodes are ends of a route, intersections, turnoff points, and the like, and further comprises a route search section for referencing the route network database and searching a route to a destination from the current position or departure point.

The invention according to a ninth aspect is the program of the eighth aspect characterized in that a routine is executed in the computer as a route search section for determining, as a departure link, a link that is in a direction that is near the orientation of a navigation device from among links in the vicinity of a current position or departure point of the navigation device on the basis of bearing information transmitted from the navigation device, and performing a route search using the determined departure link as an starting link of the route search.

The invention according to a tenth aspect is the program of the eighth aspect characterized in that a routine is executed in the computer as a route search section whereby a route search is initiated in a state in which a link that is in a direction that differs significantly from the orientation of a navigation device from among links in the vicinity of a current position or departure point of the navigation device is temporarily deleted from the route network database on the basis of bearing information that is transmitted from the navigation device.

The invention according to an eleventh aspect is a program characterized in comprising:
executing a function as a bearing detection section for detecting a bearing at which a navigation device is oriented, and
executing a routine as a route search request section for transmitting the bearing as a route search request, in addition to a destination and a current position or departure point of the navigation device, to a route search device in a computer that constitutes a navigation device in a navigation system that comprises
a navigation device provided with a route search request section and a bearing detection section, wherein the bearing detection section detects a bearing at which the navigation device is oriented, and the route search request section transmits the bearing as a route search request, in addition to a destination and
a current position or departure point of the navigation device, to the route search device, and
a route search section that has a route network database composed of links for connecting nodes and of costs of the links, wherein the nodes are ends of a route, intersections, turnoff points, and the like, and that further has a search direction determination section, wherein the route network database is referenced and a route to a destination from the current position or departure point is searched.

### [Effect of the Invention]

In the invention according to the first aspect, the navigation device uses the bearing detection section to detect the bearing at which the navigation device is oriented, and transmits bearing information together with a departure point, a destination, and other route search conditions to the route search device, and the route search device selects a link that is in a direction that is near the orientation of the navigation device from among links in the vicinity of the current position or departure point of the navigation device on the basis of the bearing information, and initiates a route search. The route search device can therefore search a route from a link that is in the direction in which the navigation device is oriented, and can perform an efficient route search without the need for performing a plurality of route searches. Since the navigation device acquires, from the route search device, a guide route in the direction in which the navigation device itself is oriented, guidance that is aligned with the travel direction can be obtained and a user can easily recognize the guide route.

In the invention according to the second aspect, the route search section in the navigation system of the first aspect is provided with a search direction determination section, a link that is in a direction that is near the orientation of the navigation device from among links in the vicinity of the current position or departure point of the navigation device is determined as a departure link on the basis of bearing information transmitted from the navigation device, and a route search is initiated from the determined departure link. The route search device can therefore search a route from a link that is in the direction in which the navigation device is oriented, and can perform an efficient route search without the need for performing a plurality of route searches. Since the navigation device acquires, from the route search device, a guide route in the direction in which the navigation device itself is oriented, guidance that is aligned with the travel direction can be obtained and a user can easily recognize the guide route.

In the invention according to the third aspect, the route search section in the navigation system of the first aspect is provided with a search direction determination section, and a route search is initiated in a state in which a link that is in a direction that differs significantly from the orientation of a navigation device from among links in the vicinity of a current position or departure point of the navigation device is temporarily deleted from the route network database. The route search device can therefore search a route from a link that is in the direction in which the navigation device is oriented, and can perform an efficient route search without the need for performing a plurality of route searches. Since the navigation device acquires, from the route search device, a guide route in the direction in which the navigation device itself is oriented, guidance that is aligned with the travel direction can be obtained and a user can easily recognize the guide route.

The invention according to the fourth aspect makes it possible to provide a route search device that constitutes the navigation system of the first aspect. Specifically, the route search device selects a link that is in a direction that is near the orientation of the navigation device from among links in the vicinity of the current position or departure point of the navigation device on the basis of bearing information, and initiates a route search. The route search device can therefore search a route from a link that is in the direction in which the navigation device is oriented, and can perform an efficient route search without the need for performing a plurality of route searches. Since the navigation device acquires, from the route search device, a guide route in the direction in which the navigation device itself is oriented, guidance that is aligned with the travel direction can be obtained and a user can easily recognize the guide route.

The invention according to the fourth aspect makes it possible to provide a route search device that constitutes the navigation system of the second aspect. Specifically, the route search device determines, as a departure link, a link that is in a direction that is near the orientation of the navigation device from among links in the vicinity of the current position or departure point of the navigation device on the basis of bearing information, and initiates a route search. The route search device can therefore search a route from a link that is in the direction in which the navigation device is oriented, and can perform an efficient route search without the need for performing a plurality of route searches. Since the navigation device acquires, from the route search device, a guide route in the direction in which the navigation device itself is oriented, guidance that is aligned with the travel direction can be obtained and a user can easily recognize the guide route.

The invention according to the sixth aspect makes it possible to provide a route search device that constitutes the navigation system of the third aspect. Specifically, the route search device initiates a route search in a state in which a link that is in a direction that differs significantly from the orientation of the navigation device from among links in the vicinity of the current position or departure point of the navigation device is temporarily deleted from the route network database. The route search device can therefore search a route from a link that is in the direction in which the navigation device is oriented, and can perform an efficient route search without the need for performing a plurality of route searches. Since the navigation device acquires, from the route search device, a guide route in the direction in which the navigation device itself is oriented, guidance that is aligned with the travel direction can be obtained and a user can easily recognize the guide route.

The invention according to seventh aspect makes it possible to provide a route search device that constitutes the navigation system of any of the first through third aspects. Specifically, the navigation device is provided with a route search request section and a bearing detection section, wherein the bearing detection section detects the bearing at which the navigation device is oriented, and the route search request section transmits the bearing as a route search request, in addition to a destination and a current position or departure point of the navigation device, to the route search device. The route search device can therefore select a link that is in a direction that is near the orientation of the navigation device from among links that are in the vicinity of the current position or departure point of the navigation device on the basis of the transmitted bearing information, and perform a route search. Since the navigation device acquires, from the route search device, a guide route in the direction in which the navigation device itself is oriented, guidance that is aligned with the travel direction can be obtained and a user can easily recognize the guide route.

The inventions according to the eighth through tenth aspects each make it possible to provide a program for implementing the route search device of the fourth through sixth aspects.

The invention according to the eleventh aspect makes it possible to provide a program for implementing the navigation device of the seventh aspect.

### BRIEF DESCRIPTION OF THE DRAWINGS

FIG. 1 is a block view showing the structure of the navigation system composed of the navigation device and route search device of the present invention;
FIG. 2 is a conceptual view showing an example of the map data stored in the map DB;
FIG. 3 is a conceptual view showing the route network that corresponds to the map data of FIG. 2;
FIG. 4 is a sequence view showing the operation sequence of the navigation system of the present invention; and
FIG. 5 is a conceptual view showing a state in which links in one direction are temporarily deleted from the route network.

### [Key to Symbols]

- 10: navigation system
- 12: network
- 20: route search device
- 21: main control section
- 22: transmission/reception section
- 23: map database (DB)
- 24: route search section
- 25: data delivery section
- 25: intersection route determination section
- 26: search direction determination section
- 27: calculation section
- 28: route network database (DB)
- 29: operation/display section
- 30: navigation device
- 31: main control section
- 32: route search request section
- 33: guide data storage section
- 34: map/route storage section
- 35: GPS processing section
- 36: bearing detection section

### BEST MODE FOR CARRYING OUT THE INVENTION

A specific example of the present invention will be described in detail hereinafter using the drawings and an embodiment.

### [Embodiment]

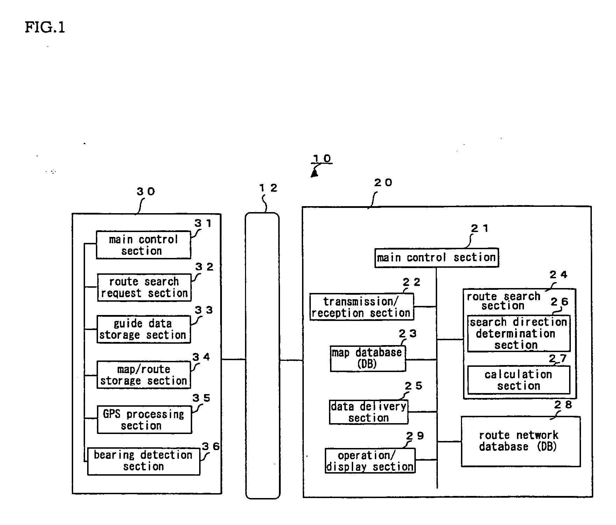

FIG. 1 is a block view showing the structure of a navigation system 10 composed of a navigation device 30 and a route search device 20 according to an embodiment of the present invention. As shown in FIG. 1, the navigation system 10 of the present invention is configured as a communication-type navigation system in which the route search device 20 and the navigation device 30 are connected to each other via a network 12. The navigation device 30 is a terminal that is carried by a walker or mounted in an automobile, and transmits a route search request together with a departure point, a destination, a means of travel, and other route search conditions to the route search device 20.

The route search device 20, which is a server of the same type as a typical information delivery server, references map data and route network data on the basis of the route search request transmitted from the navigation device 30 to search the optimum route from the departure point to the destination, and transmits the searched optimum route as a guide route together with map data to the navigation device 30. The navigation device 30 displays the map/guide route in a display section (not shown) on the basis of the map data and guide route data received from the route search device 20, and receives walking or travel guidance. The present embodiment will be described as a communication-type navigation system 10, but the present invention is not limited to a communication-type navigation system 10, and may also be applied in a car navigation system or the like which operates in stand-alone fashion and in which a navigation device and a route search device are integrated with each other.

The navigation device 30 is composed of a main control section 31, a route search request section 32, a guide data storage section 33, a map/route storage section 34, a GPS processing section 35, and a bearing detection section 36. A user issues the desired input and operating instruction from an operation/display section (not shown) in the navigation device 30, and a map or guide route delivered from the route search device 20 is displayed in the display section. The main control section 31 is structured around a microprocessor, and is provided with RAM, ROM, and other storage means in the same manner as a typical computer device. Each section is controlled by a program that is stored in the storage means.

The route search request section 32 transmits a departure point or current position, a destination, a means of travel, and other route search conditions to the route search device 20 and issues a request for a route search. The departure point and destination are commonly indicated by latitude and longitude, but methods are adopted whereby an address or telephone number is inputted and converted to latitudinal and longitudinal information in a database of the route search device 20, or a point defined on a map displayed in the navigation device 30 is converted to latitudinal and longitudinal information. Examples of the means of travel include walking, an automobile, a combination of walking and a transportation system, and the like. The present invention is characterized in that the bearing at which the navigation device 30 is oriented and which is detected by the bearing detection section 36 is transmitted in addition to the departure point, destination, means of travel, and other route search conditions when the navigation device 30 transmits a route search request to the route search device 20.

A display of "Right turn ahead" or the like, display data that correspond to a voice guidance pattern, voice data, or the like are stored in the guide data storage section 33, and when the navigation device 30 approaches a route guide (guidance), i.e., an intersection or turnoff point (guidance point), that is downloaded or pre-installed from the route search device 20, voice guidance or a guide (guide) display that is set by the guide data can be issued according to the guide data of a guide route or guidance point that are delivered to the navigation device 30 from the route search device 20. The map/route storage section 34 stores the map data and guide route data delivered from the route search device 20 to the navigation device 30 as a result of the route search request, and displays a map and a guide route in the operation/display section.

The GPS processing section 35 finds a current position by receiving and processing a GPS satellite signal in the same manner as a common navigation terminal (mobile terminal).

The route search device 20 is provided with a main control section 21, a transmission/reception section 22, a map database (DB) 23, a route search section 24, a data delivery section 25, a search direction determination section 26, a calculation section 27, a route network database (DB) 28, and an operation/display section 29. The main control section 21 is structured around a microprocessor, and is provided with RAM, ROM, and other storage means in the same manner as a typical computer device. Each section is controlled by a program that is stored in the storage means.

The transmission/reception section 22 receives data or service requests from the navigation device 30 and transmits (delivers) the requested data or data required for the service to the navigation device 30. The map database (DB) 23 is a database for storing map data that are delivered to and displayed by the navigation device 30, and the network database (DB) 28 is a database for storing route network data (node data, link data, cost data) that are used for a route search.

The route search section 24 is composed of the search direction determination section 26 and the calculation section 27, and references the map DB 23 and the route network DB 28 to find the shortest guide route from the departure point to the destination according to the route search conditions transmitted from the navigation device 30. The Dijkstra algorithm disclosed in the aforementioned Patent Reference 1 may be used as the search method. A characteristic feature of the present invention is that when the route search section 24 searches a route according to route search conditions transmitted from the navigation device 30, the shortest route is searched by a process in which the search direction determination section 26 determines a search direction based on information as to the bearing at which the navigation device 30 is oriented, a determination is made to search a link in a direction that is aligned with the bearing information from among directed links that are stored in the route network database 28, and the calculation section 27 traces and finds the cumulative cost of a link in one direction that leads from the departure point to the destination.

The data delivery section 25 delivers the data of the shortest guide route, the map data, the guide data, and other data searched by the route search section 24 to the navigation device 30. The guide route is created as vector data by the route search section 24 and delivered along with the map data to the navigation device 30. The navigation device 30 displays the map and the guide route in the display section according to the delivered map data and guide route data.

When the route search and guide data creation are completed in the route search device 20, the map data, the guide route (optimum route) data, and the guide data are delivered to the navigation device 30. The navigation device 30 stores the map data and the guide route data in the map/route storage section 34, stores the guide data in the guide data storage section 33, and displays the map and guide route in the operation/display section. The current position of the navigation device 30 is found in a certain period by the GPS processing section 35, and when the current position reaches the guidance point, a voice guidance pattern that corresponds to the guidance point is read from the guide data storage section 33, and voice data that are provided to the navigation device 30 are selected and played back according to the voice guidance pattern. The voice data that correspond to the voice guidance pattern may be pre-installed in the navigation device 30, or the voice data may be downloaded and stored from the route search device 20 each time the voice data are needed.

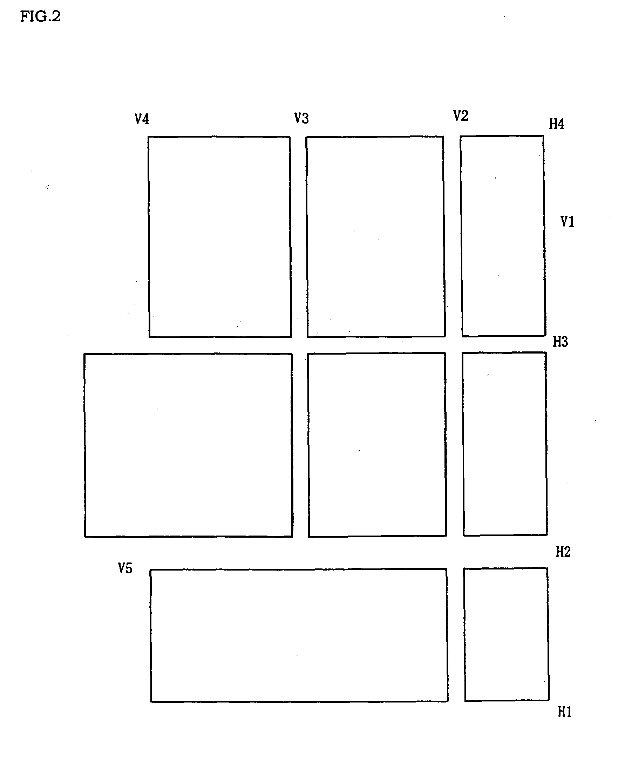

The route search routine of the navigation system 10 shown in FIG. 1 will next be described. FIG. 2 is a conceptual view showing an example of the map data stored in the map DB 23. In the drawing, a mere portion of the map data is extracted and shown in order to describe the operation of the present invention, and the extracted data indicate an area that is composed of roads H1 through H4 and V1 through V5. The actual map data are composed of a plurality of pieces of map data that is divided into a mesh structure in a prescribed range of latitude and longitude, and the map data in the mesh that correspond to the current position of the navigation device 30 are delivered.

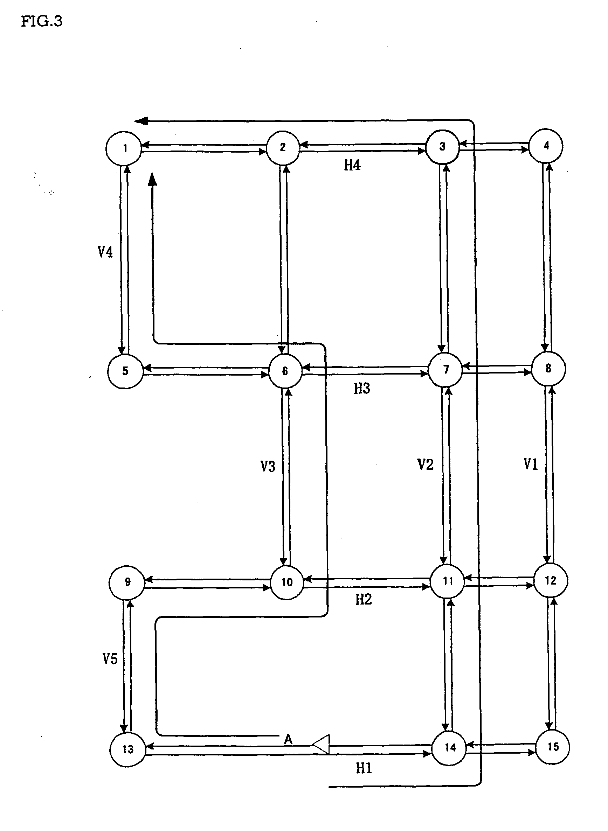

FIG. 3 is a conceptual view showing the route network that corresponds to the map data of FIG. 2. In FIG. 3, the intersections and end points of the roads H1 through H4 and V1 through V5 are nodes, and a node number from node 1 to node 15 is specified for each node. The node numbers in FIG. 3 are indicated as numbers in circles. The arrows linking the nodes indicate links. It is usually possible to travel in both directions of a road or walking route, and the links are composed of pairs of directed links that extend in both directions. Accordingly, the direction of the arrows on the arrowed lines of FIG. 3 indicates a directional link. The links also have a cost. The cost of a link is generally a distance or a required time. Data relating to nodes, links, and link costs are stored in the route network DB 28, and when a route from a certain departure node to a certain destination node is searched, the links from the departure node to the destination node are traced, the link costs are continuously totaled, and the combination of links that gives the smallest total value is determined to be the optimum route.

FIG. 3 is used to describe a route search in which node 15 is the departure point, and the destination is node 1. When departure point A is a point near node 14, and the optimum route (shortest route) is searched by a route search that does not consider the departure direction, the route that would normally be searched and followed is "node 15, node 14, node 11, node 7, node 3, node 2, node 1 (destination)." However, a right turn cannot be made at node 14 (intersection), for example, and a rerouting (updating) is assumed to occur at the current position mark A.

The shortest route at this time is "node 14, node 11, node 7, node 3, node 2, node 1 (destination)." However, this new guide route is in the opposite direction from the travel direction. A U-turn can easily be made by a walker, but the driver of an automobile avoids making U-turns when possible. If the route is "node 13, node 9, node 10, node 6, node 5, node 1 (destination)," the destination can be reached without a U-turn in the case of FIG. 3 as well. When point A can actually be crossed, the latter route becomes the shortest route, and considering the fact that the automobile is also moving during the search, it is useful to first select a route that is in the travel direction.

Therefore, in an embodiment of the present invention, a bearing detection section 36 composed of an electronic compass, a three-dimensional geomagnetic sensor, an acceleration sensor, and the like is provided to the navigation device 30; the bearing (orientation) at which the navigation device 30 is oriented is detected by the bearing detection section 36; bearing information detected by the bearing detection section 36 is added to the conditions of the route search; and a route search request is transmitted to the route search device 20. In the route search device 20, the search direction determination section 26 of the route search section 24 determines the direction of the departure link on the basis of the bearing information (bearing at which the navigation device 30 is oriented) transmitted from the navigation device 30, the route network DB 28 is referenced, and the calculation section 27 traces the links and calculates the sum of the link costs to determine the shortest route using a link that matches the direction determined by the search direction determination section 26 as the departure link.

The departure link determined by the search direction determination section 26 herein has an orientation that is near the orientation of the bearing of the navigation device 30. To be near an orientation herein means that the difference in angles between the bearing detected by the navigation device 30 and the orientation of the link is 90° or less. This takes into account an error in the bearing detected by the bearing detection section 36, or the possibility that the bearing detected by the bearing detection section 36 is offset from the actual bearing when the navigation device 30 is a mobile terminal used by a walker.

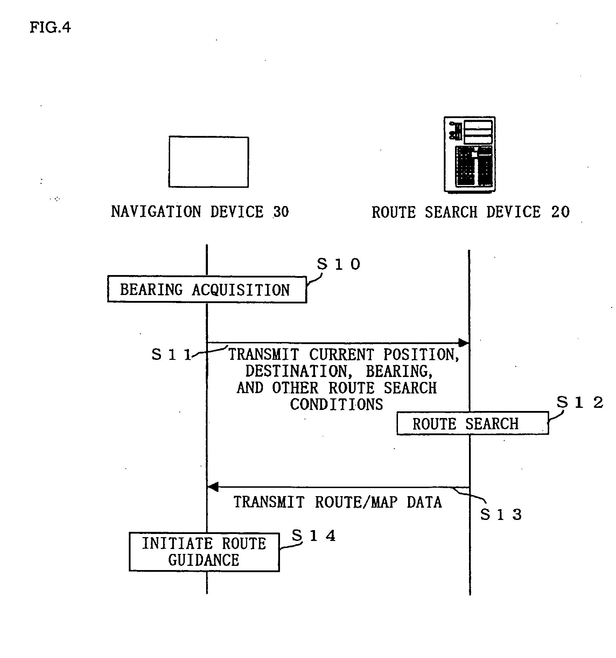

The sequence view of FIG. 4 will next be used to describe the operation in a case in which the abovementioned rerouting occurs. FIG. 4 is a sequence view showing the operating sequence of the navigation system of the present invention. In step S10, the bearing at which the navigation device 30 is oriented is acquired using an electronic compass or other bearing detection section 36 in the navigation device 30. Since the navigation device is fixed to a vehicle, the bearing detected by the bearing detection section 36 is the direction in which the vehicle is oriented. The current position of the navigation device 30 is found by the GPS processing section 35 in step S11, and the current position, the destination, the bearing information, and other route search conditions (search conditions) are transmitted to the route search device 20.

The route search device 20 therefore performs a route search using the current position of the navigation device 30 as the departure point, but the search is initiated using a link whose bearing is near that of the navigation device 30 as the departure link among links in the vicinity of the current position. As previously described, for the bearing of a link to be "near" means that the roads include links in both directions, and a directed link whose direction is near the current orientation of the navigation device 30 from among those links is used as the departure link. In FIG. 3, since the link from node 14 to node 13 is determined as the departure link, it can be considered essentially the same as if the route search were begun from node 13. In a case such as a one-way road, since there is only one directed link, this directed link is followed. Aside from determining the departure link, the commonly used Dijkstra algorithm or other search method may be used.

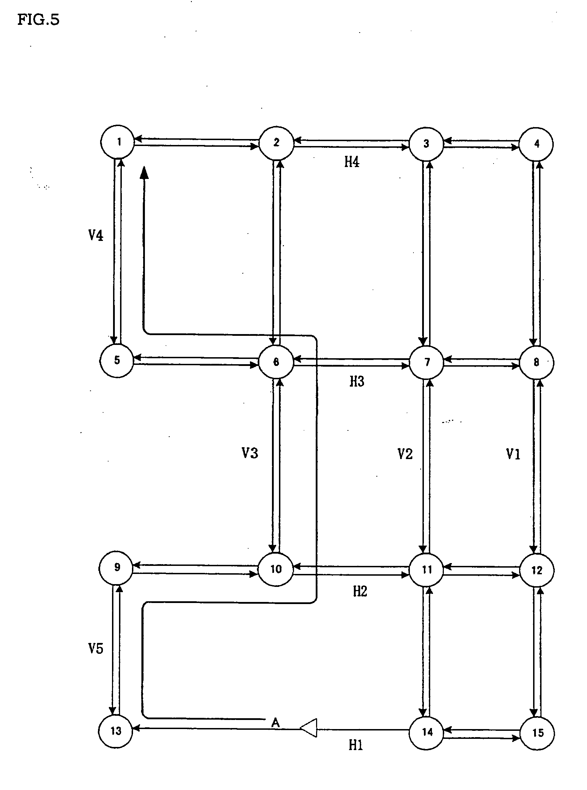

Instead of specifying the departure link, the route search may be performed in a state in which the link that is oriented in the opposite direction is temporarily deleted from the route network data. This is the case of a route network such as the one shown in FIG. 5. Specifically, FIG. 5 is a view showing a state in which links in one direction are temporarily deleted from the route network. In the route search device 20, the search direction determination section 26 leaves the link whose direction is near the current orientation of the navigation device 30 and temporarily deletes the link in the other direction from the route network DB 28 on the basis of the bearing information transmitted from the navigation device 30. The route network view of FIG. 5 shows a state in which a link is deleted from the route network.

Accordingly, the route search section 24 initiates a route search from the link that remains in the route network DB 28, i.e., the link whose direction is near the current orientation of the navigation device 30, and it is possible to perform essentially the same route search as the one described using the route network view of FIG. 3.

### INDUSTRIAL APPLICABILITY

As described above, the navigation system of the present invention makes it possible to perform a route search in accordance with the direction in which a walker or an automobile is moving or starts to move, and to provide a route search device, a navigation device , a route search method, and a program that are capable of performing an efficient route search.

An example of a communication-type navigation system used by an automobile was described in the embodiment above, but the present invention is not limited to this configuration, and may also be applied in a navigation system used by a walker in which a mobile telephone is utilized as the terminal. Since the screen of the mobile telephone is viewed in a certain direction, the upward direction of the display screen can be considered to be the travel direction. In this arrangement, since a route that unexpectedly leads backward is not displayed to the user, the user does not feel disoriented. Besides a communication-type navigation system, it is also possible to form an automobile navigation system in which the navigation device and the route search device are integrated with each other.

## Claims

1. A navigation system comprising a navigation device and a route search device, said navigation system **characterized in that**
the navigation device comprises a route search request section and a bearing detection section, wherein the bearing detection section detects a bearing at which the navigation device is oriented;
the route search request section transmits said bearing as a route search request, in addition to a destination and a current position or departure point of the navigation device, to the route search device;
the route search device comprises a route network database that is composed of links for connecting nodes and of costs of said links, wherein the nodes are ends of a route, intersections, turnoff points, and the like, and further comprises a route search section for referencing the route network database and searching a route to a destination from said current position or departure point; and
the route search section selects a link that is in a direction near an orientation of the navigation device from among links in the vicinity of a current position or departure point of said navigation device, and initiates a route search.

2. The navigation system of claim 1, **characterized in that**
said route search section has a search direction determination section;
a link that is in a direction that is near the orientation of a navigation device from among links in the vicinity of a current position or departure point of said navigation device is determined as a departure link on the basis of bearing information transmitted from said navigation device; and
a route search is performed using said determined departure link as a starting link for the route search.

3. The navigation system of claim 1, **characterized in that**
said route search section has a search direction determination section; and
a route search is initiated in a state in which a link that is in a direction that differs significantly from the orientation of a navigation device from among links in the vicinity of a current position or departure point of said navigation device is temporarily deleted from said route network database.

4. A route search device that constitutes a navigation system comprising a route search request section and a bearing detection section, wherein the bearing detection section detects a bearing at which the navigation device is oriented, and the route search request section transmits said bearing as a route search request, in addition to a destination and a current position or departure point of the navigation device, to the route search device; said route search device **characterized in** comprising:
a route network database that is composed of links for connecting nodes and of costs of said links, wherein the nodes are ends of a route, intersections, turnoff points, and the like; and
a route search section for referencing the route network database and searching a route to a destination from said current position or departure point; wherein the route search section selects a link that is in a direction near an orientation of the navigation device from among links in the vicinity of a current position or departure point of said navigation device, and initiates a route search.

5. The route search device of claim 4, **characterized in that**
said route search section has a search direction determination section;
a link that is in a direction that is near the orientation of a navigation device from among links in the vicinity of a current position or departure point of said navigation device is determined as a departure link on the basis of bearing information transmitted from said navigation device; and
a route search is performed using said determined departure link as a starting link for the route search.

6. The route search device of claim 4, **characterized in that**
said route search section comprises a search direction determination section; and
a route search is initiated in a state in which a link that is in a direction that differs significantly from the orientation of a navigation device from among links in the vicinity of a current position or departure point of said navigation device is temporarily deleted from said route network database.

7. A navigation device that comprises the navigation system of any one of claims 1 through 3, said navigation device **characterized in** comprising a route search request section and a bearing detection section, wherein
the bearing detection section detects a bearing at which the navigation device is oriented; and
the route search request section transmits said bearing as a route search request, in addition to a destination and a current position or departure point of the navigation device, to the route search device.

8. A program **characterized in** comprising executing a routine as a search direction determination section for selecting, as a departure link, a link that is in a direction that is near the orientation of a navigation device from among links in the vicinity of a current position or departure point of a navigation device on the basis of bearing information included in said route search request, and initiating a route search in a computer that constitutes a route search device in a navigation system comprising a navigation device and a route search device, wherein
the navigation device has a route search request section and a bearing detection section;
the bearing detection section detects a bearing at which the navigation device is oriented;
the route search request section transmits said bearing as a route search request, in addition to a destination and a current position or departure point of the navigation device, to the route search device; and
the route search device comprises a route network database that is composed of links for connecting nodes and of costs of said links, wherein the nodes are ends of a route, intersections, turnoff points, and the like, and further comprises a route search section for referencing the route network database and searching a route to a destination from said current position or departure point.

9. The program of claim 8, **characterized in that**
a routine is executed in said computer as a route search section for determining, as a departure link, a link that is in a direction that is near the orientation of a navigation device from among links in the vicinity of a current position or departure point of said navigation device on the basis of bearing information transmitted from the navigation device, and performing a route search using said determined departure link as an starting link of the route search.

10. The program of claim 8, **characterized in that**
a routine is executed in said computer as a route search section whereby a route search is initiated in a state in which a link that is in a direction that differs significantly from the orientation of a navigation device from among links in the vicinity of a current position or departure point of said navigation device is temporarily deleted from said route network database on the basis of bearing information that is transmitted from the navigation device.

11. A program **characterized in** comprising:
executing a function as a bearing detection section for detecting a bearing at which a navigation device is oriented; and
executing a routine as a route search request section for transmitting said bearing as a route search request, in addition to a destination and a current position or departure point of the navigation device, to a route search device in a computer that constitutes a navigation device in a navigation system that comprises:
a navigation device provided with a route search request section and a bearing detection section, wherein the bearing detection section detects a bearing at which the navigation device is oriented; and the route search request section transmits said bearing as a route search request, in addition to a destination and a current position or departure point of the navigation device, to the route search device; and
a route search section that has a route network database composed of links for connecting nodes and of costs of said links, wherein the nodes are ends of a route, intersections, turnoff points, and the like, and that further has a search direction determination section, wherein said route network database is referenced and a route to a destination from said current position or departure point is searched.
